# EUROPÄISCHE PATENTSCHRIFT

(11) **EP 3 374 978 B1**
(45) Veröffentlichungstag und Bekanntmachung des Hinweises auf die Patenterteilung: **23.01.2019**
(21) Anmeldenummer: 16794560.9
(22) Anmeldetag: 07.11.2016
(51) Int. Cl.: G08B 25/08, B60R 21/01

(54) **VERFAHREN ZUM BETREIBEN EINES KRAFTFAHRZEUGS, BEI WELCHEM EIN NOTRUF ABGESETZT WIRD, UND BILDANWEISUNGEN AN DIE INSASSEN EMPFANGEN WERDEN.**
METHOD FOR OPERATING A MOTOR VEHICLE, IN WHICH METHOD AN EMERGENCY CALL IS MADE AND IMAGE-BASED INSTRUCTIONS FOR THE OCCUPANTS ARE RECEIVED
PROCÉDÉ DE COMMANDE D'UN VÉHICULE À MOTEUR, COMPRENANT L'ÉMISSION D'UN APPEL D'URGENCE ET LA RÉCEPTION D'INSTRUCTIONS SOUS FORME D'IMAGES DESTINÉES AUX OCCUPANTS

(30) Priorität: 13.11.2015 DE 102015014750
(43) Veröffentlichungstag der Anmeldung: 19.09.2018
(73) Patentinhaber: Audi AG, 85045 Ingolstadt (DE)
(72) Erfinder: LÖFFLER, Jürgen, 81675 München (DE)
(86) Internationale Anmeldenummer: PCT/EP2016/076785
(87) Internationale Veröffentlichungsnummer: WO 2017/080940

(56) Entgegenhaltungen:
- EP-A2- 1 188 617
- WO-A1-2006/067008
- DE-A1- 19 945 147
- DE-A1-102004 059 713
- DE-A1-102011 119 094

## Beschreibung

Die Erfindung betrifft ein Verfahren zum Betreiben eines Kraftfahrzeugs, bei welchem ein Notruf des Kraftfahrzeugs abgesetzt wird. Durch den Notruf werden Bilddaten von zumindest einer Kamera des Kraftfahrzeugs und Zustandsdaten von zumindest einer zu der Kamera unterschiedlichen Fahrzeugkomponente des Kraftfahrzeugs an eine fahrzeugexterne Einrichtung ausgesendet. Weiterhin betrifft die Erfindung ein Kraftfahrzeug, welches eine Kamera, eine von der Kamera verschiedene Fahrzeugkomponente und eine Kommunikationseinheit zum Absetzen eines Notrufs und zum Aussenden von Bilddaten der Kamera und Zustandsdaten der Fahrzeugkomponente an eine fahrzeugexterne Einrichtung umfasst.

Verfahren zum Betreiben eines Kraftfahrzeugs, bei welchem ein Notruf des Kraftfahrzeugs abgesetzt wird, sind aus dem Stand der Technik bekannt. So beschreibt die DE 10 2014 200 567 A1 ein Verfahren zur Übertragung von Bild- und/oder Audiodaten von einem Unfall eines Fahrzeugs an eine weiterverarbeitende Stelle. Die Bild- und/oder Audiodaten werden vor dem Unfall erfasst und gespeichert. Wird ein Unfall des Fahrzeugs festgestellt, werden die gespeicherten Bild- und/oder Audiodaten an die weiterverarbeitende Stelle bereitgestellt. Zusätzlich zu den Bilddaten können Daten eines Radarsystems erfasst, in dem Speicher gespeichert und der weiterverarbeitenden Stelle zur Verfügung gestellt werden.

Die DE 10 2011 076 638 A1 offenbart ein Verfahren zur Fahrzeugkommunikation über ein fahrzeugimplementiertes Fahrzeugdiagnosesystem. Es werden Fahrzeugdiagnosedaten eines Fahrzeugs aus dem fahrzeugimplementierten Fahrzeugdiagnosesystem über eine Luftschnittstelle an ein mobiles Benutzerkommunikationsendgerät übertragen.

In der DE 10 2011 110 457 A1 wird ein integriertes Taxinotrufsystem zur Direktvermittlung via Smartphone beschrieben. Das System ermöglicht eine Überwachung des Innenraums eines Taxifahrzeugs. Bei Betätigung eines Alarmknopfs werden zeitgleich Bilder des Fahrzeuginnenraums via Smartphone an eine Notrufzentrale übermittelt. Die Notrufzentrale kann daraufhin binnen Sekunden miterleben was im Taxifahrzeug geschieht und kann schnellstmöglich per Ton und Bild in das Geschehen eingreifen und somit die Situation deeskalieren und kontrollieren.

Die EP 2 146 325 A1 beschreibt ein Aufzeichnungsgerät für die Aufnahme und Bearbeitung von Bilddaten in einem Fahrzeug. Das Aufzeichnungsgerät weist einen Bildprozessor zur Verarbeitung von Bilddaten in einem Fahrzeug auf, welche zusammen mit weiteren Fahrzeugdaten in die Datenstruktur eines Fahrzeugbussystems als gemischte Daten abgebildet werden.

Aus der DE 10 2012 003 981 A1 ist ein System und Verfahren zum Erfassen von Daten einer Fahrt eines Kraftfahrzeugs bekannt. Dabei zeigt eine Anzeigeeinrichtung Bilddaten zusammen mit zumindest einem Betriebsparameter des Kraftfahrzeugs an.

Die DE 10 2013 213 872 A1 beschreibt ein Fahrzeug mit einer Auslöseeinrichtung und ein Verfahren zur Erfassung und/oder Meldung einer Unfallsituation. Dabei werden mittels einer Vielzahl von Bilderfassungseinrichtungen Videobildinformationen erfasst und in Verbindung mit Kalibrierungsdaten der jeweiligen Bilderfassungseinrichtung in einer Speichereinrichtung gespeichert.

Das Dokument WO 2006/067008 offenbart die Einrichtung einer Videoverbindung zwischen einer Zentrale und einem verunglückten Kraftfahrzeug.

Es ist Aufgabe der Erfindung, ein Verfahren sowie ein Kraftfahrzeug zu schaffen, mit welchem das Kraftfahrzeug sicherer betrieben werden kann.

Diese Aufgabe wird erfindungsgemäß durch ein Verfahren sowie durch ein Kraftfahrzeug mit den Merkmalen gemäß den jeweiligen unabhängigen Ansprüchen gelöst.

Bei einem erfindungsgemäßen Verfahren wird ein Kraftfahrzeug betrieben. Es wird ein Notruf des Kraftfahrzeugs abgesetzt. Durch den Notruf werden Bilddaten von zumindest einer Kamera des Kraftfahrzeugs und Zustandsdaten von zumindest einer zu der Kamera unterschiedlichen Fahrzeugkomponente des Kraftfahrzeugs an eine fahrzeugexterne Einrichtung ausgesendet. Ein wesentlicher Gedanke der Erfindung ist darin zu sehen, dass die Zustandsdaten vor dem Übermitteln an die fahrzeugexterne Einrichtung in ein aus den Bilddaten nach einem vorbestimmten Bildkodierstandard gebildetes Bildsignal eingebettet werden und das Bildsignal mit den eingebetteten Zustandsdaten an die fahrzeugexterne Einrichtung ausgesendet wird.

Der Erfindung liegt die Erkenntnis zugrunde, dass das Einbetten der Zustandsdaten in das Bildsignal dazu führt, dass die Zustandsdaten in der fahrzeugexternen Einrichtung einfacher ausgewertet werden können. Dadurch kann zuverlässiger auf den Notruf des Kraftfahrzeugs reagiert werden.

Der Notruf des Kraftfahrzeugs kann beispielsweise automatisch bei einem Unfall des Kraftfahrzeugs oder manuell von einem Insassen des Kraftfahrzeugs abgesetzt werden. Ein solcher Notruf wird auch als "eCall" bezeichnet. Der Notruf wird beispielsweise von einem bordseitigen System des Kraftfahrzeugs abgesetzt und beispielsweise über ein öffentliches Mobilfunknetz an eine als fahrzeugexterne Einrichtung ausgebildete Notrufabfragestelle übermittelt. Dabei wird insbesondere eine Tonverbindung zwischen dem Kraftfahrzeug und der fahrzeugexternen Einrichtung hergestellt. Zusätzlich werden durch den Notruf die Bilddaten von dem Kraftfahrzeug ausgesendet und vorzugsweise an die fahrzeugexterne Einrichtung übertragen. Dabei kann ein Operator in der fahrzeugexternen Einrichtung Art und Schwere eines Unfalls und beispielsweise den Zustand der Fahrzeuginsassen und/oder des Fahrzeugumfelds durch Auswertung der Bilddaten besser beurteilen und entsprechend Hilfsmaßnahmen einleiten.

Die zusätzlich zu Bild und Ton übermittelten Zustandsdaten der Fahrzeugkomponente dienen dann beispielsweise dazu, Informationen über das Kraftfahrzeug, insbesondere zum Zeitpunkt einer Kollision, bereitzustellen. Die Zustandsdaten können beispielsweise den Zustand des Fahrzeugs und/oder den Zustand der Fahrzeugkomponente, beispielsweise eines Steuergeräts des Kraftfahrzeugs, beschreiben. Ein aktueller Messwert eines Sensors wird hierbei ebenfalls als ein Zustandswert des Sensors angesehen.

Durch das Einbetten der Zustandsdaten in das Bildsignal können die Zustandsdaten einfacher an die fahrzeugexterne Einrichtung übermittelt werden und in der fahrzeugexternen Einrichtung einfacher und schneller ausgewertet werden. Der Bildkodierstandard kann beispielsweise als JPEG File Interchange Format (JFIF) oder aber als MPEG-4/AVC (Advanced Video Coding) gemäß dem MPEG-4-Standard vorliegen. Durch das Einbetten der Zustandsdaten in das Bildsignal wird ein Integrieren der Zustandsdaten in das Bildsignal erreicht. Die fahrzeugexterne Einrichtung kann nun bei Vorliegen des Dekodierverfahrens gemäß dem Bildkodierstandard die in dem Bildsignal eingebetteten Zustandsdaten in einfacher Weise auslesen. Es ist dadurch also insbesondere nicht notwendig, dass die Zustandsdaten als separates Signal neben dem Bildsignal an die fahrzeugexterne Einrichtung übertragen werden.

Erfindungsgemäß ist es vorgesehen, dass nach dem Übermitteln des Notrufs an die fahrzeugexterne Einrichtung, eine Bildanweisung für einen Insassen des Kraftfahrzeugs aus der fahrzeugexternen Einrichtung von dem Kraftfahrzeug empfangen wird, und die Bildanweisung auf einer Anzeigeeinheit des Kraftfahrzeugs und/oder auf einer mit dem Kraftfahrzeug gekoppelten mobilen Einheit für den Insassen ausgegeben wird. Durch die Bildanweisung ist beispielsweise ein Demonstrationsvideo beschrieben, welches Hinweise zum Verhalten in der Notfallsituation enthält. So können in der fahrzeugexternen Einrichtung beispielsweise verschiedene vorgefertigte, situationsspezifische Bildanweisungen für den Insassen des Kraftfahrzeugs vorliegen. Die Bildanweisung kann nun beispielsweise automatisch bei Erkennen einer bestimmten Situation des Insassen des Kraftfahrzeugs durch die fahrzeugexterne Einrichtung an das Kraftfahrzeug von der fahrzeugexternen Einrichtung übertragen werden. Insbesondere ist die Bildanweisung unterschiedlich von einem Bildgespräch beziehungsweise einer Videotelefonie, bei welcher ein Operator der fahrzeugexternen Einrichtung direkten Kontakt mit dem Insassen des Kraftfahrzeugs aufnimmt. Die Bildanweisung ist insbesondere derart ausgebildet, dass dadurch beispielsweise ein Vorgehen für eine standardmäßige Problemlösung hinsichtlich der erkannten Situation, in welcher sich der Insasse aktuell befindet, bereitgestellt wird. Dadurch wird das Kraftfahrzeug wiederum sicherer betrieben.

Vorzugsweise ist es vorgesehen, dass die Zustandsdaten als Metadaten des Bildkodierstandards in das Bildsignal eingebettet werden. Die Metadaten können dann beispielsweise in einem Header des Bildsignals eingebettet werden. Die Zustandsdaten können aber beispielsweise auch in eine Austastlücke des Bildsignals eingebettet werden. Dadurch kann das Bildsignal effektiv genutzt werden, um die Zustandsdaten an die fahrzeugexterne Einrichtung auszusenden.

Weiterhin ist es vorzugsweise vorgesehen, dass die Zustandsdaten als sichtbare Bildinformationen in das Bildsignal eingebettet werden. So können die Zustandsdaten derart in das Bildsignal eingebettet werden, dass bei einer Anzeige der Bilddaten auf einer Anzeigeeinheit der fahrzeugexternen Einrichtung zugleich eine graphische Darstellung der Zustandsdaten erfolgt. Zu diesem Zweck können die Zustandsdaten beispielsweise als graphische Symbole in die sichtbare Bildinformation des Bildsignals aufgenommen beziehungsweise gerendert werden. Ein Operator der fahrzeugexternen Einrichtung kann die Zustandsdaten dann bereits visuell aufbereitet beim Betrachten der Bilddaten entnehmen. Ein Auswerten der Zustandsdaten wird dadurch beschleunigt und das Kraftfahrzeug wird sicherer betrieben.

Weiterhin kann es vorgesehen sein, dass die Bilddaten als Bildsequenz mit mehreren Einzelbildern von der Kamera bereitgestellt werden und jeweils zum Zeitpunkt der Aufnahme des jeweiligen Einzelbilds erfasste Zustandsdaten der Fahrzeugkomponente in einen Bildsignalabschnitt des jeweiligen Einzelbilds eingebettet werden. So wird beispielsweise jedes der Einzelbilder mit einem oder mehreren Datenfeldern versehen, in das die Zustandsdaten der Fahrzeugkomponente eingetragen werden. Die Zustandsdaten sind dann insbesondere die zum Zeitpunkt der Aufnahme des jeweiligen Einzelbilds aktuellen Zustandsdaten der Fahrzeugkomponente. Vorteilhaft ist, dass dadurch bereits eine zeitliche Zuordnung der Zustandsdaten zu den Bilddaten vorgenommen wird. So ist es nicht mehr notwendig, einen Zeitstempel der Zustandsdaten mit einem Zeitstempel der Bilddaten zu vergleichen, um die entsprechenden Zustandsdaten für das entsprechende Einzelbild bereitzustellen. Die Auswertung der Zustandsdaten zusammen mit den Bilddaten kann dadurch genauer und schneller erfolgen. Die Bilddaten liegen insbesondere als Videodaten vor.

In einer weiteren Ausführungsform kann es vorgesehen sein, dass die Bilddaten vor dem Aussenden an die fahrzeugexterne Einrichtung im Kraftfahrzeug auf Basis von Referenzbilddaten und/oder Sensordaten von Sensoren des Kraftfahrzeugs zumindest teilweise ausgewertet werden und ein Ergebnis der Auswertung in das Bildsignal der Bilddaten eingebettet wird. Durch das teilweise Auswerten der Bilddaten kann der fahrzeugexternen Einrichtung bereits eine vorläufige Auswertung über den Zustand des Kraftfahrzeugs bereitgestellt werden. Diese vorläufige Auswertung über den Zustand des Kraftfahrzeugs muss also nicht erst durch Auswerten der Bilddaten in der fahrzeugexternen Einrichtung selbst erzeugt werden. Die fahrzeugexterne Einrichtung kann also schneller und zuverlässiger auf den Notruf reagieren. Beispielsweise vergleicht ein Rechenmodul im Kraftfahrzeug kontinuierlich die Bilddaten der Kamera mit vordefinierten Mustern beziehungsweise den Referenzbilddaten und kann so eine Unfallsituation klassifizieren, wie zum Beispiel eine Kollision mit einem vorausfahrenden Kraftfahrzeug, eine Kollision mit einem Motorrad, eine Kollision mit einem Fußgänger oder ähnliches. Bei der automatisierten Auswertung der Bilddaten können beispielsweise die Sensordaten wie eine Geschwindigkeit des Kraftfahrzeugs und/oder eine Beschleunigung des Kraftfahrzeugs herangezogen werden, um das Ergebnis der Auswertung zu verbessern.

Weiterhin kann es vorgesehen sein, dass die Zustandsdaten bereits vor dem Absetzen des Notrufs in die Bilddaten eingebettet werden und die Bilddaten mit den eingebetteten Zustandsdaten in einer Kommunikationseinheit des Kraftfahrzeugs in vorbestimmten zeitlichen Abständen abgespeichert und für das Aussenden an die fahrzeugexterne Einrichtung vorgehalten werden. Die Bilddaten und die Zustandsdaten sind damit beispielsweise in einem Arbeitsspeicher der Kommunikationseinheit abgespeichert und können dann beispielsweise bei Beschädigung einer von der Kommunikationseinheit verschiedenen Fahrzeugkomponente des Kraftfahrzeugs trotzdem an die fahrzeugexterne Einrichtung ausgesendet werden. In einer weiteren Ausführungsform kann beispielsweise auch eine Fahrzeugkomponente, welche die Bilddaten und die Zustandsdaten an die Kommunikationseinheit des Kraftfahrzeugs weiterleitet, bereits über ein Antennenmodul und die Fähigkeit zur Übertragung des Bildsignals an die fahrzeugexterne Einrichtung verfügen. Dadurch wird beispielsweise auch eine Übermittlung des Bildsignals an die fahrzeugexterne Einrichtung ermöglicht, falls die Kommunikationseinheit beschädigt wird. Insgesamt kann das Bildsignal dadurch zuverlässiger von dem Kraftfahrzeug an die fahrzeugexterne Einrichtung ausgesendet werden.

Weiterhin kann es vorgesehen sein, dass als die Zustandsdaten zumindest aufgezeichnete und in einem Speicher gespeicherte Sensordaten in das Bildsignal eingebettet werden, wobei als die Sensordaten eine Längsbeschleunigung des Kraftfahrzeugs und/oder eine Querbeschleunigung des Kraftfahrzeugs und/oder ein Neigungswinkel des Kraftfahrzeugs und/oder ein Abstand zu einem in einem Umgebungsbereich des Kraftfahrzeugs angeordneten Objekt in das Bildsignal eingebettet wird. Die Zustandsdaten können beispielsweise über im Kraftfahrzeug vorhandene Datenbusse eingelesen werden. Die Längsbeschleunigung des Kraftfahrzeugs und/oder die Querbeschleunigung des Kraftfahrzeugs wird insbesondere zum Zeitpunkt einer Kollision des Kraftfahrzeugs aufgezeichnet. Die Sensordaten können aber auch über einen vorbestimmten Zeitraum als Sensordatenverlauf bereitgestellt werden. Die Fahrzeugbeschleunigung kann beispielsweise abhängig von mehreren Achsen des Kraftfahrzeugs erfolgen. Der Abstand zu dem Objekt in dem Umgebungsbereich kann beispielsweise durch einen Radarsensor des Kraftfahrzeugs bereitgestellt werden. So können durch den Radarsensor beispielsweise auch Objektlisten von Objekten in dem Umgebungsbereich bereitgestellt werden. Als die Sensordaten können auch ein Bremsmoment des Kraftfahrzeugs und/oder ein Motormoment des Kraftfahrzeugs aufgezeichnet werden. Durch die Sensordaten werden die Zustandsdaten genauer beschrieben und dadurch kann auch die Information, welche durch den Notruf von dem Kraftfahrzeug an die fahrzeugexterne Einrichtung ausgesendet wird, genauer und informativer bereitgestellt werden. Das Kraftfahrzeug wird dadurch wiederum sicherer betrieben.

In einer weiteren Ausführungsform kann es vorgesehen sein, dass als die Zustandsdaten eine Position des Kraftfahrzeugs und/oder eine Sensorinformation eines Gurtstraffers des Kraftfahrzeugs und/oder eine Sensorinformation eines Airbags des Kraftfahrzeugs in das Bildsignal eingebettet wird. Die Position des Kraftfahrzeugs kann beispielsweise von einem GNSS-Empfänger (GNSS - Global Navigation Satellite System), wie beispielsweise einem GPS (Global Positioning System) bereitgestellt werden. Die Sensorinformation des Sicherheitsgurtstraffers oder die Sicherheitsinformation des Airbags kann beispielsweise darüber Aufschluss geben, ob der Sicherheitsgurtstraffer beziehungsweise der Airbag während einer Kollision des Kraftfahrzeugs ausgelöst hat. Dadurch können die Bilddaten mit den Zustandsdaten wiederum aussagekräftiger und informativer an die fahrzeugexterne Einrichtung ausgesendet werden. Das Kraftfahrzeug wird dadurch sicherer betrieben.

Die Erfindung betrifft auch ein Kraftfahrzeug, welches eine Kamera, eine von der Kamera verschiedene Fahrzeugkomponente und eine Kommunikationseinheit zum Absetzen eines Notrufs und zum Aussenden von Bilddaten der Kamera und Zustandsdaten der Fahrzeugkomponente an eine fahrzeugexterne Einrichtung umfasst. Als ein wesentlicher Gedanke der Erfindung ist vorgesehen, dass das Kraftfahrzeug eine Kodiereinheit aufweist, welche dazu ausgebildet ist, die Zustandsdaten vor dem Übermitteln an die fahrzeugexterne Einrichtung nach einem vorbestimmten Bildkodierstandard in ein Bildsignal der Bilddaten einzubetten, und die Kommunikationseinheit des Kraftfahrzeugs dazu ausgebildet ist, das Bildsignal mit den eingebetteten Zustandsdaten an die fahrzeugexterne Einrichtung auszusenden.

Die mit Bezug auf das erfindungsgemäße Verfahren vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Ausführungsbeispiele der Erfindung werden nachfolgend anhand schematischer Zeichnungen näher erläutert.

Dabei zeigen:
- Fig. 1: eine schematische Draufsicht eines Ausführungsbeispiels eines erfindungsgemäßen Kraftfahrzeugs; und
- Fig. 2: eine schematische Darstellung mehrerer Kameras des Kraftfahrzeugs, einer Videosteuerungseinheit des Kraftfahrzeugs, einer Hauptsteuerungseinheit des Kraftfahrzeugs und einer Kommunikationseinheit des Kraftfahrzeugs.

In den Figuren werden gleiche oder funktionsgleiche Elemente mit den gleichen Bezugszeichen versehen.

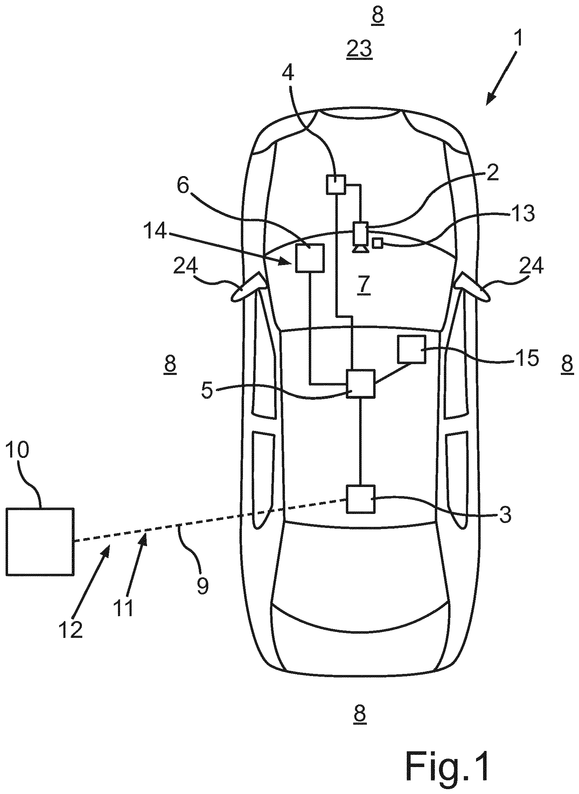

In Fig. 1 ist schematisch ein Kraftfahrzeug 1 mit einer Kamera 2, einer Kommunikationseinheit 3, einer Videosteuerungseinheit 4, einer Hauptsteuerungseinheit 5 und einer Anzeigeeinheit 6 dargestellt.

Die Kamera 2 ist dabei beispielsweise als Innenraumkamera ausgebildet, um einen Innenraum 7 des Kraftfahrzeugs 1 zu erfassen. Ergänzend oder alternativ kann die Kamera 2 aber auch an einer Front, einem Heck oder einer Seite des Kraftfahrzeugs 1 angeordnet sein und als Außenkamera ausgebildet sein. Vorzugsweise ist die Kamera also derart an dem Kraftfahrzeug 1 angeordnet, dass zumindest teilweise der Innenraum 7 und/oder ein Umgebungsbereich 8 des Kraftfahrzeugs 1 erfasst werden kann. Das Kraftfahrzeug 1 kann auch mehrere Kameras 2 umfassen, welche dann beispielsweise in unterschiedlichen Positionen des Kraftfahrzeugs angeordnet sind. Die Kamera 2 kann beispielsweise als CMOS-Kamera (Complementary Metal-Oxide-Semiconductor) oder aber als CCD-Kamera (Charge-coupled Device) oder als eine beliebige Art von Bilderfassungseinrichtung ausgebildet sein. Die Kamera 2 stellt vorzugsweise eine Bildsequenz von Bildern bereit. Die Bildsequenz der Bilder wird dann beispielsweise in Echtzeit durch die Videosteuerungseinheit 4 verarbeitet.

Die Kommunikationseinheit 3 kann beliebig an dem Kraftfahrzeug 1 angeordnet sein. Die Kommunikationseinheit 3 ist dazu ausgebildet, einen Notruf 9 an eine fahrzeugexterne Einrichtung 10 abzusetzen. Der Notruf 9 kann beispielsweise über ein öffentliches Mobilfunknetz übertragen werden. Weiterhin wird durch den Notruf 9 ein Bildsignal 11 von Bilddaten 12 der Kamera 2 an die fahrzeugexterne Einrichtung 10 ausgesendet. So kann beispielsweise nach dem Auslösen des Notrufs 9 zwischen dem Kraftfahrzeug 1 und der fahrzeugexternen Einrichtung 10, beispielsweise einer Notrufabfragestelle, eine IP-Verbindung zur Übertragung des Bildsignals 11 der Bilddaten 12 beziehungsweise Videodaten hergestellt. Als Übertragungsverfahren zwischen dem Kraftfahrzeug 1 und der fahrzeugexternen Einrichtung 10 kann beispielsweise das ONVIF-Format (Open Network Video Interface Forum) genutzt werden.

Die Bilddaten 12 umfassen beispielsweise eine Sicht der Kamera 2 in den Innenraum 7 und ein Tonsignal aus dem Innenraum 7. Das Tonsignal kann beispielsweise mittels eines Mikrofons 13 des Kraftfahrzeugs 1 aufgenommen werden.

Die Videosteuerungseinheit 4 kann ebenfalls vielfältig in dem Kraftfahrzeug 1 angeordnet werden und ist mit der Kamera 2 und der Hauptsteuerungseinheit 5 gekoppelt. Die Hauptsteuerungseinheit 5 wiederum kann ebenfalls vielfältig im Kraftfahrzeug 1 angeordnet sein und ist vorzugsweise mit der Kommunikationseinheit 3 gekoppelt.

Die Anzeigeeinheit 6 ist beispielsweise in einem Cockpit 14 des Kraftfahrzeugs 1 angeordnet. Die Anzeigeeinheit 6 kann aber auch vielfältig in dem Kraftfahrzeug 1 angeordnet sein, vorzugsweise allerdings so, dass ein Insasse des Kraftfahrzeugs 1 die Anzeigeeinheit 6 betrachten kann. Die Anzeigeeinheit 6 ist zur Anzeige der Bilddaten 12 ausgebildet. So ist die Anzeigeeinheit 6 beispielsweise als Flüssigkristallanzeige ausgebildet.

Das Kraftfahrzeug 1 umfasst weiterhin eine Fahrzeugkomponente 15, welche beispielsweise als Radarsensor, als Airbag, als Querbeschleunigungssensor, als Längsbeschleunigungssensor, als Neigungswinkelsensor, als Motormomentsensor, als Gurtstraffer oder als vielfältiger Sensor des Kraftfahrzeugs 1 ausgebildet ist. Die Fahrzeugkomponente 15 ist insbesondere mit der Hauptsteuerungseinheit 5 gekoppelt.

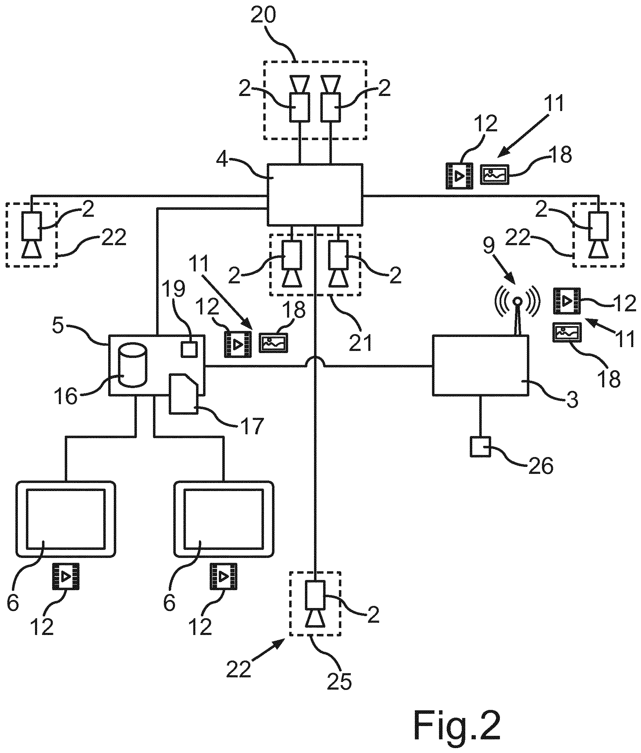

Fig. 2 zeigt die Vernetzung von Einheiten des Kraftfahrzeugs 1 zur Durchführung des Verfahrens. Es sind mehrere Kameras 2 mit der Videosteuerungseinheit 4 gekoppelt. Die Kameras 2 sind vorzugsweise an unterschiedlichen Orten an dem Kraftfahrzeug 1 angeordnet. Zumindest eine der Kameras 2 ist vorzugsweise in den Innenraum des Kraftfahrzeugs 1 gerichtet und erfasst insbesondere einen Fahrer des Kraftfahrzeugs 1. Die Videosteuerungseinheit 4 kann beispielsweise in eine der Kameras 2 integriert sein oder aber separat dazu ausgebildet sein. Die Videosteuerungseinheit 4 ist mit der Hauptsteuerungseinheit 5 gekoppelt. Die Hauptsteuerungseinheit 5 weist einen Festplattenspeicher 16 und eine SD-Karte 17 (Secure Digital Memory Card) auf. Die Hauptsteuerungseinheit 5 ist mit der Kommunikationseinheit 3 und mehreren Anzeigeeinheiten 6 gekoppelt.

Durch die Kameras 2 werden die Bilddaten 12 aufgenommen. Von der Fahrzeugkomponente 15 werden Zustandsdaten 18 bereitgestellt. Die Zustandsdaten 18 beschreiben beispielsweise den Zustand der Fahrzeugkomponente 15 aktuell oder zum Zeitpunkt einer Kollision des Kraftfahrzeugs 1 oder über einen zeitlichen Verlauf. Von den Zustandsdaten 18 sind beispielsweise auch Sensordaten eines Sensors des Kraftfahrzeugs 1 umfasst. So können beispielsweise auch Daten eines Umfeldsensors des Kraftfahrzeugs 1, beispielsweise eines Radarsensors, durch die Zustandsdaten 18 beschrieben werden.

Die Zustandsdaten 18 werden dann vorzugsweise mittels einer Kodiereinheit 19 des Kraftfahrzeugs 1 in das Bildsignal 11 eingebettet. Die Kodiereinheit 19 ist beispielsweise in der Hauptsteuerungseinheit 5 angeordnet. Die Kodiereinheit 19 kann aber beispielsweise auch in der Videosteuerungseinheit 4, in der Kommunikationseinheit 3 oder aber als separate Einheit in dem Kraftfahrzeug 1 angeordnet sein. Durch die Kodiereinheit 19 wird das Integrieren der Zustandsdaten in das Bildsignal 11 durchgeführt. Dies kann beispielsweise dadurch erfolgen, dass die Zustandsdaten 18 als Metadaten eines Bildkodierstandards in das Bildsignal 11 eingebettet werden oder aber, dass die Zustandsdaten 18 als sichtbare Bildinformationen in das Bildsignal 11 eingebettet werden. Für den Fall, dass die Zustandsdaten 18 als sichtbare Bildinformationen in das Bildsignal 11 eingebettet werden, werden die Zustandsdaten insbesondere in grafische Symbole gerendert.

Die Bilddaten 12 werden insbesondere als Bildsequenz mit mehreren Einzelbildern von der Kamera 2 bereitgestellt. Die Bildsequenz ist beispielsweise als Videostream ausgebildet. Bei dem Übertragen mehrerer Einzelbilder der Bilddaten 12 an die fahrzeugexterne Einrichtung 15 können beispielsweise auch Einzelbilder übermittelt werden, welche vor dem Absetzen des Notrufs 9 durch die Kamera 2 aufgenommen wurden. Die Bilder vor dem Absetzen des Notrufs 9 können beispielsweise in vorgegebenen Zeitintervallen, beispielsweise von -0,1 s, -0,2 s, -0,3 s, -0,4 s, -0,5 s, -1 s, -2 s, -3 s, -4 s, -5 s, - 10 s, -20 s, -30 s erfolgen. Die Bilddaten 12 können auch nach Anforderung durch die fahrzeugexterne Einrichtung 10 von dem Kraftfahrzeug 1 ausgesendet werden. So kann beispielsweise ein bestimmtes Einzelbild der Bilddaten 12 von der fahrzeugexternen Einrichtung 10 angefordert werden. Insbesondere ist es vorgesehen, dass die Bilddaten 12 fortlaufend übertragen werden. Dabei werden nach Auslösen des Notrufs 9 beispielsweise fortlaufend Einzelbilder der Kamera 2 übertragen, welche in einem konfigurierbaren Zeitintervall, beispielsweise alle 100 ms, erfasst werden. Weiterhin ist es vorzugsweise vorgesehen, dass die Bilddaten 12 aus mehreren Bildern von unterschiedlichen Kameras 2, insbesondere als zusammengesetzte Bilddatei übertragen werden. Dabei werden die von den Kameras 2 zu einem bestimmten Zeitpunkt aufgezeichneten Bilder zu den Bilddaten 12, insbesondere zu der zusammengesetzten Bilddatei zusammengefügt, um beispielsweise eine Rundumsichtdarstellung des Kraftfahrzeugs 1 zu erhalten.

Die Bilddaten 12 können aber auch als eine Videodatei übertragen werden. Die Videodatei kann beispielsweise die Bilddaten 12 bis zur Absetzung des Notrufs 9 aufgenommenen Bilddaten 12 umfassen. Die Videodaten sind dann beispielsweise in einem standardisierten Format komprimiert, wie beispielsweise MPEG-4/AVC (Advanced Video Coding). Die Länge der Videodatei ist beispielsweise konfigurierbar und kann bis beispielsweise 60s betragen. Insbesondere kann auch die Auflösung der durch die Kameras 2 bereitgestellten Bilddaten 12 angepasst werden. Beispielsweise kann die Auflösung der Bilddaten 12 an eine zur Verfügung stehende Übertragungsbandbreite zwischen dem Kraftfahrzeug 1 und der fahrzeugexternen Einrichtung 10 angepasst werden.

Beispielsweise werden die Bilddaten 12 der Kamera 2, welche den Innenraum 7 erfasst, standardmäßig an die fahrzeugexterne Einrichtung 10 ausgesendet. Ergänzend können dann beispielsweise die Bilddaten 12 von weiteren Kameras 2, welche beispielsweise den Umgebungsbereich 8 des Kraftfahrzeugs 1 aufnehmen, von der fahrzeugexternen Einrichtung 10 angefordert werden und dadurch von dem Kraftfahrzeug 1 an die fahrzeugexterne Einrichtung 10 ausgesendet werden.

Die Kameras 2 können gemäß Fig. 2 als Frontkameras 20 des Kraftfahrzeugs 1, Innenraumkameras 21 des Kraftfahrzeugs 1 und Außenkameras 22 des Kraftfahrzeugs 1 ausgebildet sein. Die Frontkameras 20 des Kraftfahrzeugs 1 sind vorzugsweise auf einen vorderen Umgebungsbereich 23 des Umgebungsbereichs 8 ausgerichtet. Die Innenraumkameras 21 sind vorzugsweise auf den Innenraum 7 des Kraftfahrzeugs 1 ausgerichtet und erfassen insbesondere einen Fahrer des Kraftfahrzeugs 1. Die Außenkameras 22 sind beispielsweise an Außenspiegeln 24 des Kraftfahrzeugs 1 angeordnet und entgegen einer aktuellen Fahrtrichtung des Kraftfahrzeugs 1 ausgerichtet. Eine Kamera 2 der Außenkameras 22 kann beispielsweise auch als Rückfahrkamera 25 ausgebildet sein.

Die Bilddaten 12 werden von den Kameras 2 an die Videosteuerungseinheit 4 übertragen und von der Videosteuerungseinheit 4 zu der Hauptsteuerungseinheit 5. In der Hauptsteuerungseinheit 5 können die Bilddaten 12 dann beispielsweise in dem Festplattenspeicher 16 oder der SD-Karte 17 gespeichert werden. Die Hauptsteuerungseinheit 5 ist beispielsweise über eine Ethernet-Verbindung an die Kommunikationseinheit 3 gebunden. Die Kommunikationseinheit 3 verfügt dann insbesondere über eine Mobilfunkverbindung zu der fahrzeugexternen Einrichtung 10, bei Bedarf. An die Kommunikationseinheit 3 ist eine Notrufauslöseeinheit 26 angebunden. Durch die Notrufauslöseeinheit 26 wird der Notruf 9 ausgelöst.

Die Hauptsteuerungseinheit 5 verfügt über einen oder mehrere der Anzeigeeinheiten 6 zur Anzeige der Bilddaten 12. Beim Auslösen des Notrufs 9 fordert die Kommunikationseinheit 3 die Bilddaten 12 von der Hauptsteuerungseinheit 5 an und übermittelt diese an die fahrzeugexterne Einrichtung 10. Weiterhin kann die Kommunikationseinheit 3 eine Verbindung zur Übertragung eines Videostreams mit der fahrzeugexternen Einrichtung 10 aufbauen und Videostreams bidirektional an die Hauptsteuerungseinheit 5 übertragen. Durch die Übertragung des Videostreams kann beispielsweise auch eine Bildanweisung für einen Insassen des Kraftfahrzeugs 1 übertragen werden. Durch die Bildanweisung können dem Insassen dann Problemlösungsvorschläge für seine aktuelle Situation bereitgestellt werden.

Ergänzend oder alternativ speichert die Kommunikationseinheit 3 kontinuierlich die Bilddaten 12, die von der Hauptsteuerungseinheit 5 in einem Arbeitsspeicher der Kommunikationseinheit 3 zwischen und übermittelt diese beim Auslösen des Notrufs 9 an die fahrzeugexterne Einrichtung 10. Die Bilddaten 12 können dann auch bei Beschädigung der Hauptsteuerungseinheit 5 an die fahrzeugexterne Einrichtung 10 übertragen werden.

Weiterhin ergänzend oder alternativ verfügt auch die Hauptsteuerungseinheit 5 über ein Antennenmodul und die Fähigkeit zur Übertragung von den Bilddaten 12 an die fahrzeugexterne Einrichtung 10.

Es können auch vorhandene Steuergeräte des Kraftfahrzeugs 1 genutzt werden, um beispielsweise die Aufgabe der Videosteuerungseinheit 4 und/oder der Hauptsteuerungseinheit 5 zu übernehmen. So kann beispielsweise ein zentrales Fahrerassistenzsystem die Aufgaben der Videosteuerungseinheit 4 übernehmen und es kann beispielsweise auch ein Zentralrechner eines Infotainmentsystems die Aufgaben der Hauptsteuerungseinheit 5 übernehmen.

## Patentansprüche

1. Verfahren zum Betreiben eines Kraftfahrzeugs (1), bei welchem ein Notruf (9) des Kraftfahrzeugs (1) abgesetzt wird, und durch den Notruf (9) Bilddaten (12) von zumindest einer Kamera (2) des Kraftfahrzeugs (1) und Zustandsdaten (18) von zumindest einer zu der Kamera (2) unterschiedlichen Fahrzeugkomponente (15) des Kraftfahrzeugs (1) an eine fahrzeugexterne Einrichtung (10) ausgesendet werden, wobei die Zustandsdaten (18) vor dem Übermitteln an die fahrzeugexterne Einrichtung (10) in ein aus den Bilddaten (12) nach einem vorbestimmten Bildkodierstandard gebildetes Bildsignal (11) eingebettet werden und das Bildsignal (11) mit den eingebetteten Zustandsdaten (18) an die fahrzeugexterne Einrichtung (10) ausgesendet wird,
**dadurch gekennzeichnet, dass**
nach dem Übermitteln des Notrufs (9) an die fahrzeugexterne Einrichtung (10), eine Bildanweisung für einen Insassen des Kraftfahrzeugs (1) aus der fahrzeugexternen Einrichtung (10) von dem Kraftfahrzeug (1) empfangen wird, und die Bildanweisung auf einer Anzeigeeinheit (6) des Kraftfahrzeugs (1) und/oder auf einer mit dem Kraftfahrzeug (1) gekoppelten mobilen Einheit für den Insassen ausgegeben wird, wobei in der fahrzeugexternen Einrichtung (10) verschiedene vorgefertigte, situationsspezifische Bildanweisungen für den Insassen des Kraftfahrzeugs (1) vorliegen und durch die empfangene Bildanweisung ein Vorgehen für eine standardmäßige Problemlösung hinsichtlich der erkannten Situation, in welcher sich der Insasse aktuell befindet, bereitgestellt wird.

2. Verfahren nach Anspruch 1,
**dadurch gekennzeichnet, dass**
die Zustandsdaten (18) als Metadaten des Bildkodierstandards in das Bildsignal (11) eingebettet werden.

3. Verfahren nach Anspruch 1 oder 2,
**dadurch gekennzeichnet, dass**
die Zustandsdaten (18) als sichtbare Bildinformation in das Bildsignal (11) eingebettet werden.

4. Verfahren nach einem der vorhergehenden Ansprüche,
**dadurch gekennzeichnet, dass**
die Bilddaten (12) als Bildsequenz mit mehreren Einzelbildern von der Kamera (2) bereitgestellt werden und jeweils zum Zeitpunkt der Aufnahme des jeweiligen Einzelbilds erfasste Zustandsdaten (18) der Fahrzeugkomponente (15) in einen Bildsignalabschnitt des jeweiligen Einzelbilds eingebettet werden.

5. Verfahren nach einem der vorhergehenden Ansprüche,
**dadurch gekennzeichnet, dass**
die Bilddaten (15) vor dem Aussenden an die fahrzeugexterne Einrichtung (10) im Kraftfahrzeug (1) auf Basis von Referenzbilddaten und/oder Sensordaten von Sensoren des Kraftfahrzeugs (1) zumindest teilweise ausgewertet werden und ein Ergebnis der Auswertung in das Bildsignal (11) der Bilddaten (12) eingebettet wird.

6. Verfahren nach einem der vorhergehenden Ansprüche,
**dadurch gekennzeichnet, dass**
die Zustandsdaten (18) bereits vor dem Absetzen des Notrufs (9) in die Bilddaten (12) eingebettet werden und die Bilddaten (12) mit den eingebetteten Zustandsdaten (18) in einer Kommunikationseinheit (3) des Kraftfahrzeugs (1) in vorbestimmten zeitlichen Abständen abgespeichert und für das Aussenden an die fahrzeugexterne Einrichtung (10) vorgehalten werden.

7. Verfahren nach einem der vorhergehenden Ansprüche,
**dadurch gekennzeichnet, dass**
als die Zustandsdaten (18) zumindest aufgezeichnete und in einem Speicher gespeicherte Sensordaten in das Bildsignal (11) eingebettet werden, wobei als die Sensordaten eine Längsbeschleunigung des Kraftfahrzeugs (1) und/oder eine Querbeschleunigung des Kraftfahrzeugs (1) und/oder ein Neigungswinkel des Kraftfahrzeugs (1) und/oder ein Abstand zu einem in einem Umgebungsbereich (8) des Kraftfahrzeugs (1) angeordneten Objekt in das Bildsignal (11) eingebettet wird.

8. Verfahren nach einem der vorhergehenden Ansprüche,
**dadurch gekennzeichnet, dass**
als die Zustandsdaten (18) eine Position des Kraftfahrzeugs (1) und/oder eine Sensorinformation eines Sicherheitsgurtstraffers des Kraftfahrzeugs (1) und/oder eine Sensorinformation eines Airbags des Kraftfahrzeugs (1) in das Bildsignal (11) eingebettet wird.

9. Kraftfahrzeug (1), welches eine Kamera (2), eine von der Kamera (2) verschiedenen Fahrzeugkomponente (15) und eine Kommunikationseinheit (3) zum Absetzen eines Notrufs und zum Aussenden von Bilddaten der Kamera (2) und Zustandsdaten (18) der Fahrzeugkomponente (15) an eine fahrzeugexterne Einrichtung (10) umfasst, wobei das Kraftfahrzeug (1) eine Kodiereinheit (19) aufweist, welche dazu ausgebildet ist, die Zustandsdaten (18) vor dem Übermitteln an die fahrzeugexterne Einrichtung (10) nach einem vorbestimmten Bildkodierstandard in ein Bildsignal (11) der Bilddaten (12) einzubetten, und die Kommunikationseinheit (3) des Kraftfahrzeugs (1) dazu ausgebildet ist, das Bildsignal (11) mit den eingebetteten Zustandsdaten (18) an die fahrzeugexterne Einrichtung (10) auszusenden,
**dadurch gekennzeichnet, dass**
das Kraftfahrzeug (1) dazu ausgelegt ist, nach dem Übermitteln des Notrufs (9) an die fahrzeugexterne Einrichtung (10), eine Bildanweisung für einen Insassen des Kraftfahrzeugs (1) aus der fahrzeugexternen Einrichtung (10) zu empfangen, und die Bildanweisung auf einer Anzeigeeinheit (6) des Kraftfahrzeugs (1) und/oder auf einer mit dem Kraftfahrzeug (1) gekoppelten mobilen Einheit für den Insassen auszugeben, wobei in der fahrzeugexternen Einrichtung (10) verschiedene vorgefertigte, situationsspezifische Bildanweisungen für den Insassen des Kraftfahrzeugs (1) vorliegen und die empfangene Bildanweisung derart ausgebildet ist, dass dadurch ein Vorgehen für eine standardmäßige Problemlösung hinsichtlich der erkannten Situation, in welcher sich der Insasse aktuell befindet, bereitgestellt wird.

## Claims

1. Method for operating a motor vehicle (1), in which an emergency call (9) of the motor vehicle (1) is issued, and via the emergency call (9) image data (12) from at least one camera (2) of the motor vehicle (1) and status data (18) from at least one vehicle component (15) of the motor vehicle (1) different from the camera (2) are transmitted to a vehicle-external device (10), wherein the status data (18) prior to the transmission to the vehicle-external device (10), are embedded in an image signal (11) formed from the image data (12) according to a predetermined image code standard, and the image signal (11) with the embedded status data (18) is transmitted to the vehicle-external device (10),
**characterized in that**
after transmission of the emergency call (9) to the vehicle-external device (10), an image instruction is received by the motor vehicle (1) for an occupant of the motor vehicle (1) from the vehicle-external device (10), and the image instruction is displayed for the occupant on a display unit (6) of the motor vehicle (1) and/or on a mobile unit coupled to the motor vehicle (1), wherein in the vehicle-external device (10) different ready-made, situation-specific image instructions for the occupant of the motor vehicle (1) are present, and by means of the received image instruction a procedure is provided for a standard problem solution with respect to the detected situation in which the occupant currently finds him/herself.

2. Method according to claim 1,
**characterized in that**
the status data (18) are embedded as metadata of the image code standard in the image signal (11).

3. Method according to claim 1 or 2,
**characterized in that**
the status data (18) are embedded as visible image information in the image signal (11).

4. Method according to any of the preceding claims,
**characterized in that**
the image data (12) are provided as an image sequence with several individual images from the camera (2) and status data (18) of the vehicle component (15), acquired at the time of recording the respective individual image, are embedded into one image signal section of the respective individual image.

5. Method according to any of the preceding claims,
**characterized in that**
the image data (15) before transmission to the vehicle-external device (10) are at least partially evaluated in the motor vehicle (1) on the basis of reference image data and/or sensor data from sensors of the motor vehicle (1), and a result of the evaluation is embedded in the image signal (11) of the image data (12).

6. Method according to any of the preceding claims,
**characterized in that**
the status data (18) are already embedded in the image data (12) even before the emergency call (9) is issued, and the image data (12) with the embedded status data (18) are stored in a communication unit (3) of the motor vehicle (1) at predetermined time intervals and kept for sending to the vehicle-external device (10).

7. Method according to any of the preceding claims,
**characterized in that**
sensor data at least recorded and stored in a memory are embedded in the image signal (11) as the status data (18), wherein as the sensor data a longitudinal acceleration of the motor vehicle (1), and/or a lateral acceleration of the motor vehicle (1), and/or an inclination angle of the motor vehicle (1), and/or a distance to an object arranged in a vicinity (8) of the motor vehicle, (1) is embedded in the image signal (11).

8. Method according to any of the preceding claims,
**characterized in that**
embedded in the image signal (11) as status data (18) is a position of the motor vehicle (1) and/or an item of sensor information of a seatbelt tightener of the motor vehicle (1) and/or an item of sensor information of an airbag of the motor vehicle (1).

9. Motor vehicle (1) comprising a camera (2), a vehicle component (15) different from the camera (2) and a communication unit (3) for issuing an emergency call and transmitting image data of the camera (2) and status data (18) of the vehicle component (15) to a vehicle-external device (10), wherein the motor vehicle (1) comprises a coding unit (19) which is adapted to embed in an image signal (11) of the image data (12) the status data (18) before transmitting to the vehicle-external device (10) according to a predetermined image code standard, and the communication unit (3) of the motor vehicle (1) is adapted to transmit the image signal (11) with the embedded status data (18) to the vehicle-external device (10),
**characterized in that**
the motor vehicle (1) is designed, after the transmission of the emergency call (9) to the vehicle-external device (10), to receive an image instruction for an occupant of the motor vehicle (1) from the vehicle-external device (10), and to display the image instruction for the occupant on a display unit (6) of the motor vehicle (1) and/or on a mobile unit coupled to the motor vehicle (1), wherein in the vehicle-external device (10) various ready-made, situation-specific image instructions for the occupant of the motor vehicle (1) are present and the received image instruction is designed to provide a procedure for a standard problem solution regarding the detected situation in which the occupant currently finds him/herself.

## Revendications

1. Procédé de commande d'un véhicule à moteur (1), dans lequel est émis un appel d'urgence (9) du véhicule à moteur (1) et par lequel appel d'urgence (9) sont expédiées des données d'image (12) d'au moins une caméra (2) du véhicule à moteur (1) et des données d'état (18) d'au moins un composant (15) du véhicule à moteur (1) différent de la caméra (2) à un dispositif (10) extérieur au véhicule, dans lequel les données d'état (18) sont incorporées, avant la transmission au dispositif (10) extérieur au véhicule, à un signal d'image (11) formé à partir des données d'image (12) selon une norme de codage d'image prédéterminée et le signal d'image (11) est expédié au dispositif (10) extérieur au véhicule avec les données d'état incorporées (18),
**caractérisé en ce que**,
après la transmission de l'appel d'urgence (9) au dispositif (10) extérieur au véhicule, une instruction d'image pour un occupant du véhicule à moteur (1) est reçue du dispositif (10) extérieur au véhicule par le véhicule à moteur (1) et l'instruction d'image est affichée sur une unité d'affichage (6) du véhicule à moteur (1) et/ou sur une unité mobile couplée au véhicule à moteur (1) pour l'occupant, dans lequel il y a dans le dispositif (10) extérieur au véhicule diverses instructions d'image préétablies spécifiques à la situation pour l'occupant du véhicule à moteur (1) et l'instruction d'image reçue permet d'élaborer une procédure pour une résolution de problème standard concernant la situation identifiée, dans laquelle se trouve actuellement l'occupant.

2. Procédé selon la revendication 1,
**caractérisé en ce que**
les données d'état (18) sont incorporées au signal d'image (11) sous forme de métadonnées de la norme de codage d'image.

3. Procédé selon la revendication 1 ou 2,
**caractérisé en ce que**
les données d'état (18) sont incorporées au signal d'image (11) sous forme d'informations d'image visibles.

4. Procédé selon l'une quelconque des revendications précédentes,
**caractérisé en ce que**
les données d'image (12) sont élaborées sous forme de séquence d'images avec plusieurs images individuelles par la caméra (2) et les données d'état (18) du composant de véhicule (15) détectées respectivement au moment de la réception de l'image individuelle respective sont incorporées à une section de signal d'image de l'image individuelle respective.

5. Procédé selon l'une quelconque des revendications précédentes,
**caractérisé en ce que**
les données d'images (15) sont au moins en partie évaluées, avant l'envoi au dispositif (10) extérieur au véhicule, dans le véhicule à moteur (1) sur la base de données d'image de référence et/ou de données de capteurs du véhicule à moteur (1) et un résultat de l'évaluation est incorporé au signal d'image (11) des données d'image (12).

6. Procédé selon l'une quelconque des revendications précédentes,
**caractérisé en ce que**
les données d'état (18) sont déjà incorporées aux données d'image (12) avant l'émission de l'appel d'urgence (9) et les données d'image (12) sont mémorisées avec les données d'état (18) incorporées dans une unité de communication (3) du véhicule à moteur (1) à intervalles de temps prédéterminés et conservées pour l'envoi au dispositif (10) extérieur au véhicule.

7. Procédé selon l'une quelconque des revendications précédentes,
**caractérisé en ce que**
les données de capteurs au moins enregistrées comme données d'état (18) et mémorisées dans une mémoire sont incorporées au signal d'image (11), dans lequel on incorpore au signal d'image (11) comme données de capteurs une accélération longitudinale du véhicule à moteur (1) et/ou une accélération transversale du véhicule à moteur (1) et/ou un angle d'inclinaison du véhicule à moteur (1) et/ou une distance à un objet agencé dans une zone environnante (8) du véhicule à moteur (1).

8. Procédé selon l'une quelconque des revendications précédentes,
**caractérisé en ce que**
on incorpore au signal d'image (11) comme données d'état (18) une position du véhicule à moteur (1) et/ou une information d'un capteur de ceinture de sécurité du véhicule à moteur (1) et/ou une information de capteur d'un coussin d'air du véhicule à moteur (1).

9. Véhicule à moteur (1) qui comprend une caméra (2), un composant de véhicule (15) différent de la caméra (2) et une unité de communication (3) pour émettre un appel d'urgence et envoyer des données d'image de la caméra (2) et des données d'état (18) du composant de véhicule (15) à un dispositif (10) extérieur au véhicule, dans lequel le véhicule à moteur (1) présente une unité de codage (19) qui est conçue pour incorporer les données d'état (18) à un signal d'image (11) des données d'image (12) avant la transmission au dispositif (10) extérieur au véhicule selon une norme de codage d'image prédéterminée et l'unité de communication (3) du véhicule à moteur (1) est conçue pour envoyer le signal d'image (11) avec les données d'état (18) incorporées au dispositif (10) extérieur au véhicule,
**caractérisé en ce que**
le véhicule à moteur (1) est conçu pour recevoir, après la transmission de l'appel d'urgence (9) au dispositif (10) extérieur au véhicule, une instruction d'image pour un occupant du véhicule à moteur (1) du dispositif (10) extérieur au véhicule et délivrer l'instruction d'image à une unité d'affichage (6) du véhicule à moteur (1) et/ou à une unité mobile couplée au véhicule à moteur (1) pour l'occupant, dans lequel, il y a dans le dispositif (10) extérieur au véhicule diverses instructions d'image préétablies spécifiques à la situation pour l'occupant du véhicule à moteur (1) et l'instruction d'image reçue est conçue de manière à élaborer une procédure pour une résolution de problème standard concernant la situation identifiée dans laquelle se trouve actuellement l'occupant.
